# FASCICULE DE BREVET EUROPEEN

(11) **EP 3 703 205 B1**
(45) Date de publication et mention de la délivrance du brevet: **09.02.2022**
(21) Numéro de dépôt: 20159122.9
(22) Date de dépôt: 24.02.2020
(51) Int. Cl.: H02G 3/04, H02G 3/00

(54) **DISPOSITIF CACHE-CÂBLES**
KABELABDECKUNGSVORRICHTUNG
CABLE CONCEALING DEVICE

(30) Priorité: 01.03.2019 FR 1902151
(43) Date de publication de la demande: 02.09.2020
(73) Titulaire: Dupont, Hervé, 59480 La Bassée (FR)
(72) Inventeur: Dupont, Hervé, 59480 La Bassée (FR)
(74) Mandataire: Plasseraud IP

(56) Documents cités:
- WO-A1-83/01868
- DE-A1-102014 100 796
- OriginalLOWE: "Cutting sealing profiles at inner corners", , 19 février 2014 (2014-02-19), page 1, XP054979649, Extrait de l'Internet: URL:https://www.youtube.com/watch?v=DL_LWm LOHmI [extrait le 2019-09-04]

## Description

L'invention concerne un dispositif cache-câbles, un procédé d'installation d'un tel dispositif cache-câbles sur la paroi d'un bâtiment, ainsi qu'une paroi de bâtiment équipée d'un tel dispositif cache-câbles.

### Domaine technique

L'invention relève du domaine des dispositifs cache-câbles, employés afin de dissimuler des câbles fixés le long d'une paroi d'un bâtiment.

### Technique antérieure

De façon bien connue, les câbles, comme par exemple les câbles électriques ou de réseaux téléphoniques ou internet, peuvent être fixés le long d'une paroi d'un bâtiment, lorsqu'il n'est pas possible, ou trop complexe, ou encore trop coûteux d'envisager de les dissimuler dans ladite paroi, ou encore dans le sol à proximité de ladite paroi.

Néanmoins, cela s'avère particulièrement inesthétique, en ce que les câbles sont apparents sur ladite paroi et ont tendance à dénaturer son apparence. De plus, cela peut également engendrer leur détérioration, plus ou moins rapide, et notamment, dans le cas où les câbles sont fixés sur une paroi positionnée à l'extérieur d'un bâtiment, car ceux-ci vont subir directement des agressions extérieures, comme par exemple la saleté ou l'humidité, ou encore être détériorées par une personne mal intentionnée, et vont, de ce fait, se détériorer ou être détériorés.

Afin de pallier cet inconvénient, il est connu des dispositifs cache-câbles, configurés pour être fixés sur une paroi d'un bâtiment, ledit dispositif cache-câble définissant un logement, notamment étanche, recevant lesdits câbles, afin de les protéger des agressions extérieures, et d'améliorer l'aspect esthétique de ladite paroi recevant les câbles.

On connaît par exemple du document EP 0 945 943 A1 un tel dispositif cache-câbles comprenant une partie fixe, destinée à être fixée sur une paroi d'un bâtiment, afin de constituer un support de fixation, et un capot, monté mobile en rotation sur ladite partie fixe, par l'intermédiaire d'un axe de rotation positionné au niveau d'une extrémité verticale inférieure du capot, une vis de fixation assurant le blocage en rotation du capot sur ladite partie fixe, au niveau d'une extrémité supérieure du capot.

Le capot et ladite partie fixe sont conformés de sorte à former un logement à l'intérieur duquel sont reçus les câbles destinés à être fixés à une paroi, afin de masquer lesdits câbles et de les protéger de l'extérieur.

Un tel dispositif présente plusieurs inconvénients.

Tout d'abord, ce dispositif est conçu de telle sorte qu'il doit nécessairement être posé sur la paroi avant les câbles, ce qui, dans le cas d'une installation sur une paroi avec des câbles déjà fixés, complexifie et augmente sensiblement le temps de montage d'un tel dispositif, en ce qu'il s'avère indispensable de désolidariser les câbles de la paroi afin de les positionner dans le dispositif cache-câbles et de fixer l'ensemble sur ladite paroi.

Egalement, ledit capot étant fixé à ladite partie fixe par l'intermédiaire d'une vis de fixation, il s'avère indispensable de démonter ladite vis de fixation pour avoir accès à l'intérieur du logement formé entre ledit capot et ladite partie fixe, recevant les câbles, afin d'effectuer par exemple une opération de maintenance sur les câbles, ce qui complexifie et augmente considérablement le temps de réalisation d'une telle opération de maintenance.

Enfin, dans le cas où la paroi sur laquelle ledit dispositif cache-câble est de forme complexe, c'est-à-dire non-rectiligne, un tel dispositif cache-câble, s'étendant lui de façon sensiblement rectiligne, n'est pas adapté pour épouser la forme de ladite paroi, ce qui nuit à l'esthétisme de l'ensemble ou à la protection des câbles. Ainsi, il peut s'avérer nécessaire de réaliser un dispositif cache-câbles « sur-mesure » afin de s'adapter à la forme de ladite paroi, ce qui complexifie la réalisation d'un tel dispositif cache-câbles et augmente son coût de revient.

On connaît également des dispositifs cache-câbles des documents DE 10 2014 100796 A1 et WO 83/01868 A1.

### Problème technique

L'invention vient pallier ces inconvénients en proposant un dispositif cache-câbles destiné à cacher des câbles fixés sur une paroi d'un bâtiment, améliorant l'esthétisme de la paroi et assurant la protection des câbles vis-à-vis des agressions extérieures, même dans le cas d'une paroi avec une géométrie complexe.

Un autre but de la présente invention est de proposer un tel dispositif cache-câbles, pouvant être installé rapidement et simplement sur une paroi d'un bâtiment, et en particulier sur laquelle des câbles sont déjà fixés.

Un autre but de la présente invention est de proposer un tel dispositif cache-câbles facilitant et réduisant le temps de réalisation d'une opération de maintenance des câbles reçus dans ledit dispositif.

Un autre but de la présente invention est de proposer un tel dispositif cache-câbles à faible coût de revient et simple à réaliser.

Il est proposé un dispositif cache-câbles destiné à être fixé à la paroi d'un bâtiment, comprenant un profilé d'un seul tenant en un matériau élastomère, ledit profilé comprenant :
- une section semi tubulaire définissant une portion de logement, configurée pour définir, en coopération avec ladite paroi d'un bâtiment, une fois le dispositif cache-câbles fixé à ladite paroi, un logement apte à recevoir un ou plusieurs câbles fixés à ladite paroi,
- une section formant une portion de fixation, positionnée dans le prolongement de la section semi tubulaire, et configurée pour être fixée à ladite paroi d'un bâtiment par l'intermédiaire d'au moins un moyen de fixation.

Selon l'invention, ledit dispositif cache-câbles comprend en outre un élément de rigidification dans un matériau métallique, configuré pour se déformer plastiquement, et s'étendant au sein dudit profilé en matériau élastomère.

Selon l'invention, ledit élément de rigidification coopère avec ledit profilé, de sorte que l'ensemble profilé et élément de rigidification soit configuré pour être mis en forme manuellement par la déformation plastique dudit élément de rigidification selon une trajectoire non rectiligne, avec maintien en forme dudit profilé déformé élastiquement, par ledit élément de rigidification déformé plastiquement.

Selon l'invention, le profilé présente une section sensiblement en forme de point d'interrogation avec la portion de logement formant la portion arrondie supérieure du point d'interrogation et la portion de fixation, dans le prolongement de la portion de logement formant la portion rectiligne inférieure du point d'interrogation, afin que le dispositif cache-câble soit configuré de sorte qu'un logement soit formé uniquement entre la portion de logement du profilé et une paroi à laquelle il est fixé.

Selon l'invention, la section formant portion de fixation s'étend de façon sensiblement rectiligne depuis la section semi-tubulaire du profilé, et est configurée pour venir appuyer contre ladite paroi du bâtiment au niveau de sa face intérieure, et dans lequel l'extrémité libre du profilé, située à l'opposé de la portion de fixation, s'étend au-delà d'une droite imaginaire suivant la trajectoire rectiligne de la portion de fixation, et se prolongeant du côté opposé au reste du profilé, lorsque non contraint élastiquement, de sorte à contraindre élastiquement la section semi-tubulaire, en simple appui par son extrémité libre contre ladite paroi d'un bâtiment, lorsque ledit dispositif cache-câbles est fixé à ladite paroi du bâtiment par sa portion de fixation.

Selon des caractéristiques optionnelles de l'invention, prises seules ou en combinaison :
- ledit élément de rigidification est un fil de métal,
- ledit élément de rigidification est disposé au niveau du profilé en une zone intermédiaire entre la section formant une portion de fixation et la section semi-tubulaire du profilé,
- la section semi-tubulaire du profilé présente une découpe ménagée dans ladite section semi-tubulaire sous la forme d'une encoche triangulaire pointant vers ledit élément de rigidification, et ouverte du côté opposé audit élément de rigidification, ladite découpe étant configurée de sorte à permettre le pliage du profilé, autour de ladite découpe,
- le dispositif cache-câbles comprend en outre une entretoise, telle qu'une rondelle, configurée pour être positionnée entre ladite portion de fixation et ladite paroi du bâtiment, lorsque le dispositif cache-câbles est fixé à ladite paroi, de sorte à laisser un jour entre ladite portion de fixation et ladite paroi, permettant l'écoulement de liquides,
- le profilé en matière élastomère est obtenu par extrusion.

Selon un autre aspect, il est proposé un procédé d'installation d'un dispositif cache-câbles selon l'invention sur la paroi d'un bâtiment, sur laquelle est fixé au moins un câble, comprenant les étapes :
a) mise en forme manuellement du dispositif cache-câbles de sorte à épouser la forme de la paroi du bâtiment par déformation plastique dudit élément de rigidification selon une trajectoire non rectiligne, avec maintien en forme dudit profilé élastomère, déformé élastiquement, par ledit élément de rigidification déformé plastiquement,
b) positionnement du dispositif cache-câbles sur ladite paroi de sorte à ce que ledit au moins un câble se retrouve dans le logement défini entre la portion de logement du profilé du dispositif cache-câbles et ladite paroi,
c) fixation du dispositif cache-câbles à ladite paroi par l'intermédiaire d'au moins un moyen de fixation reçu dans ladite portion de fixation du profilé du dispositif cache-câbles et dans ladite paroi du bâtiment.

Selon un mode de réalisation du procédé, avant l'étape a) on réalise une découpe dans le profilé du dispositif cache-câbles pour former un dispositif cache-câbles selon la revendication 4 qui est plié autour de ladite découpe de sorte à épouser la forme de ladite paroi.

L'invention concerne encore une paroi d'un bâtiment recevant en fixation au moins un câble courant le long de ladite paroi du bâtiment, ladite paroi étant également équipée d'un dispositif cache-câbles selon l'invention, conformé de sorte à se retrouver en appui contre ladite paroi sur toute sa longueur, et fixé à ladite paroi par l'intermédiaire d'au moins un moyen de fixation reçu au niveau de la portion de fixation du profilé du dispositif cache-câbles et dans ladite paroi, dans une position telle que ledit au moins un câble est logé à l'intérieur du logement défini entre la portion de logement du profilé du dispositif cache-câbles et ladite paroi, ledit profilé du dispositif cache-câbles pouvant passer :
- d'une position de fermeture, dans laquelle l'extrémité libre du profilé du dispositif cache-câbles se trouve à proximité de ladite paroi, de sorte à empêcher l'accès audit au moins un câble, en le protégeant des agressions extérieures, à
- une position d'ouverture, dans laquelle l'extrémité libre du profilé du dispositif cache-câbles se trouve écartée de ladite paroi, de sorte à autoriser l'accès audit au moins un câble, et inversement.

Les caractéristiques exposées dans les paragraphes suivants peuvent, optionnellement, être mises en œuvre. Elles peuvent être mises en œuvre indépendamment les unes des autres ou en combinaison les unes avec les autres.

### Brève description des dessins

D'autres caractéristiques, détails et avantages de l'invention apparaîtront à la lecture de la description détaillée ci-après, et à l'analyse des dessins annexés, sur lesquels :
**Fig. 1**

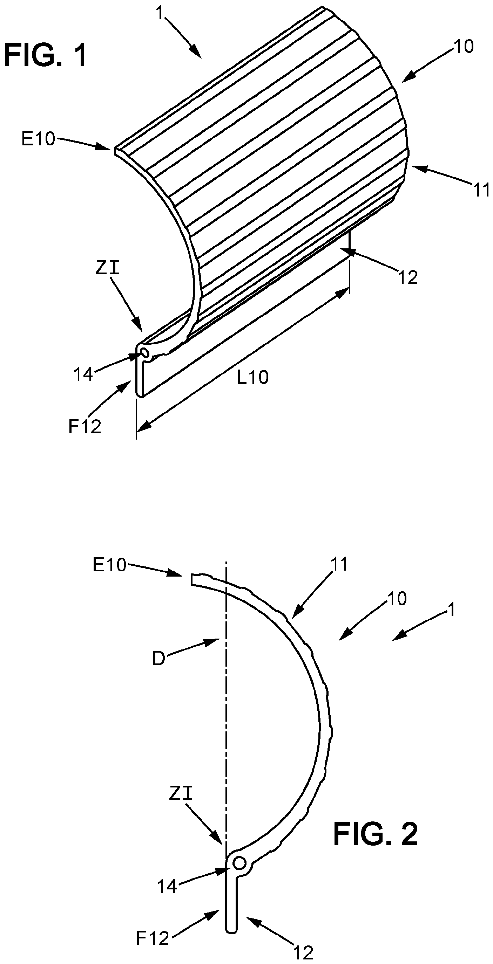

   [Fig. 1] montre une vue en perspective d'un dispositif cache-câbles selon un mode de réalisation conforme à l'invention.
**Fig. 2**
   [Fig. 2] montre une vue de côté du dispositif cache-câbles de la figure 1.
**Fig. 3**

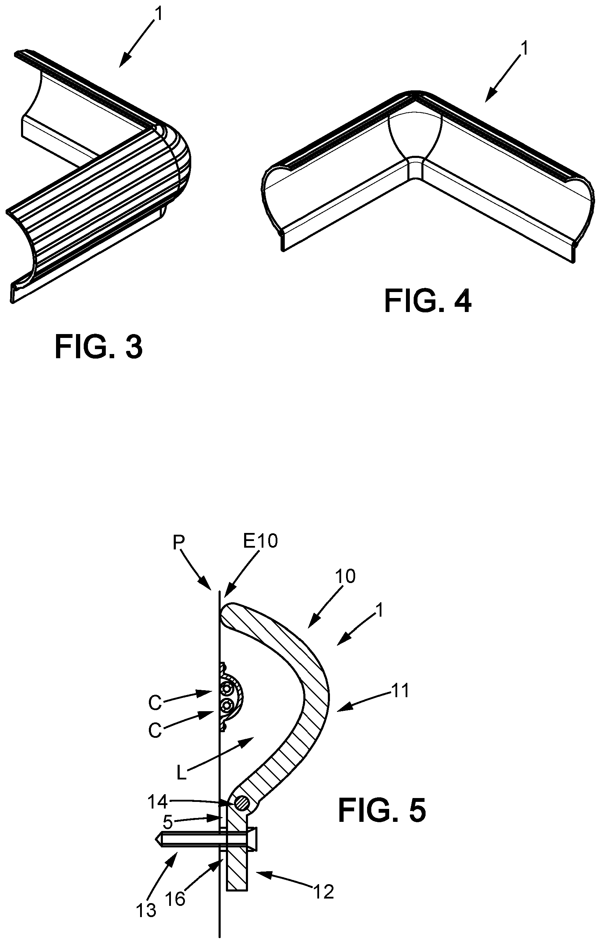

   [Fig. 3] montre une vue en perspective extérieure d'un dispositif cache-câbles selon un mode de réalisation conforme à l'invention, dans lequel le profilé est replié autour d'une découpe ménagée dans la section semi-tubulaire du profilé.
**Fig. 4**
   [Fig. 4] montre une vue en perspective intérieure du dispositif cache-câbles de la figure 3.
**Fig. 5**
   [Fig. 5] montre une vue en coupe d'une paroi d'un bâtiment recevant en fixation des câbles courant le long de ladite paroi et équipée d'un dispositif cache-câbles selon un mode de réalisation conforme à l'invention.
**Fig. 6**

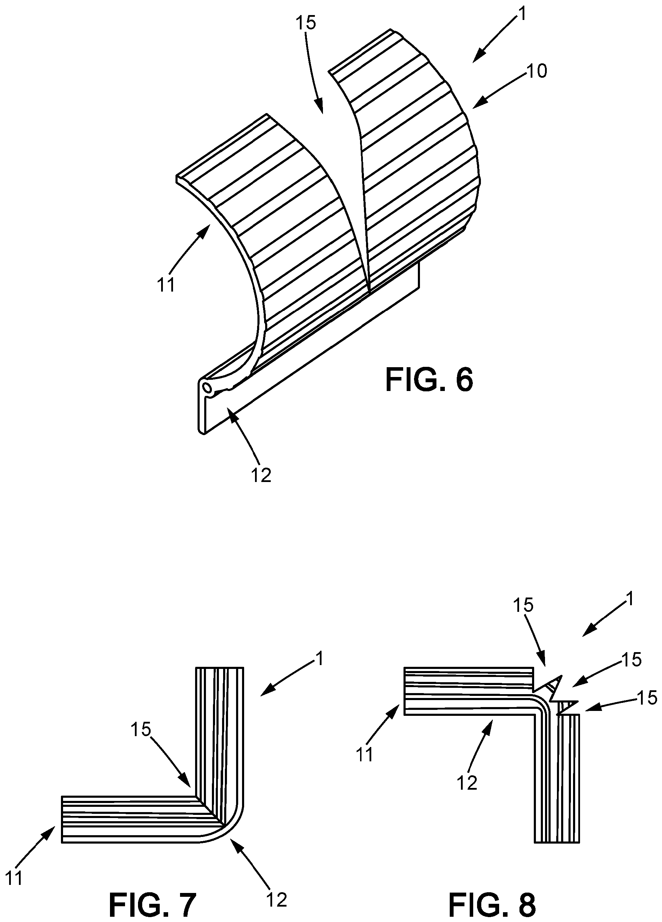

   [Fig. 6] montre une vue en perspective du dispositif cache-câbles de la figure 1, dans lequel une découpe a été pratiquée.
**Fig. 7**
   [Fig. 7] montre une vue de face d'un dispositif cache-câbles selon un mode de réalisation conforme à l'invention, dans lequel le profilé est replié autour d'une découpe ménagée dans la section semi-tubulaire du profilé, selon un premier sens.
**Fig. 8**
   [Fig. 8] montre une vue de face d'un dispositif cache-câbles selon un mode de réalisation conforme à l'invention, dans lequel le profilé est replié autour d'une découpe ménagée dans la section semi-tubulaire du profilé, selon un deuxième sens.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

L'invention concerne un dispositif cache-câbles 1, destiné à être fixé à la paroi P d'un bâtiment, comprenant un profilé 10 d'un seul tenant en un matériau élastomère ledit profilé comprenant :
- une section semi tubulaire 11 définissant une portion de logement, configurée pour définir, en coopération avec ladite paroi P d'un bâtiment, une fois le dispositif cache-câbles 1 fixé à ladite paroi P, un logement L apte à recevoir un ou plusieurs câbles C fixés à ladite paroi,
- une section formant une portion de fixation 12, positionnée dans le prolongement de la section semi tubulaire 11, et configurée pour être fixée à ladite paroi P d'un bâtiment par l'intermédiaire d'au moins un moyen de fixation 13.

Selon l'invention, ledit dispositif cache-câbles 1 comprend en outre un élément de rigidification 14 dans un matériau métallique, configuré pour se déformer plastiquement, et s'étendant au sein dudit profilé 10 en matériau élastomère.

Selon l'invention, ledit élément de rigidification 14 coopère avec ledit profilé 10, de sorte que l'ensemble profilé 10 et élément de rigidification 14 soit configuré pour être mis en forme manuellement par la déformation plastique dudit élément de rigidification 14 selon une trajectoire non rectiligne, avec maintien en forme dudit profilé 10 déformé élastiquement, par ledit élément de rigidification 14 déformé plastiquement.

Ainsi, ledit profilé 10 du dispositif cache-câble 1 peut aisément être mis en forme de sorte à prendre la forme souhaitée. Il peut donc avantageusement être mis en forme de sorte à avoir une forme telle qu'il viendra épouser la forme de la paroi P du bâtiment, lorsqu'en appui et fixé sur celle-ci afin de cacher le au moins un câble C, et notamment dans le cas où ladite paroi P présente une forme courbe ou avec des angles, l'élément de rigidification 14 permettant qu'il maintienne cette forme souhaitée.

L'installation d'un tel dispositif cache-câbles 1 s'en trouve particulièrement simplifiée et accélérée, car, avec un même dispositif cache-câbles 1, il est possible d'envisager une installation sur différentes parois avec des géométries variées. Notamment, il n'est pas nécessaire de prévoir différentes géométries de dispositifs cache-câbles 1 afin de s'adapter à différentes géométries de parois de bâtiments, un même dispositif cache-câbles 1 pouvant être prévu pour différentes parois avec des géométries différentes, contrairement aux dispositifs cache-câbles de l'état de la technique, et notamment celui décrit dans le document EP 0 945 943 A1.

Notamment, ledit dispositif cache-câbles 1 peut être disposé selon toutes les directions de l'espace sur ladite paroi P, en fonction de la position et de l'orientation des câbles C sur ladite paroi P, qui peuvent être variées.

Un opérateur peut donc mettre manuellement en forme ledit profilé 10 du dispositif cache-câbles 1 au cours de l'installation dudit dispositif cache-câbles 1 sur la paroi P du bâtiment, l'élément de rigidification 14 étant avantageusement dimensionné et réalisé dans un matériau permettant une telle mise en forme manuelle du profilé 10.

Egalement, afin de garantir l'élasticité du profilé 10, tout en lui assurant une rigidité et une solidité suffisante pour résister aux agressions, qu'il peut subir, lorsque le dispositif cache-câbles 1 selon l'invention est positionné sur ladite paroi P du bâtiment, et notamment s'il s'agit d'une paroi P extérieure, ledit profilé 10 peut par exemple être réalisé en Styrène Ethylène Butylène Styrène (SEBS), en Ethylène-Propylène-Diène Monomère (EPDM), en Polychlorure de Vinyle (PVC), en Elastomère Thermoplastique (TPE), en Polyuréthane Thermoplastique (TPU), etc.

Notamment, ledit profilé 10 peut être réalisé dans un matériau présentant une dureté SHORE A comprise entre 60 et 95, de préférence entre 70 et 90.L'élastomère dans lequel est réalisé ledit profilé 10 et/ou son épaisseur peu(ven)t avantageusement être choisi(s) de sorte à faciliter sa découpe par un opérateur, notamment à l'aide d'un outil à main, comme par exemple un cutter, tout en permettant d'assurer une protection fiable aux câbles C.

Le profilé 10 peut être configuré de sorte à pouvoir être peint, afin de pouvoir améliorer son rendu visuel, par exemple pour avoir une couleur similaire à celle de la paroi P sur laquelle est fixé le dispositif cache-câbles 1.

Comme visible plus particulièrement sur les exemples de réalisation des figures 1 à 6, le profilé 10 présente une section sensiblement en forme de point d'interrogation avec la portion de logement 11 formant la portion arrondie supérieure du point d'interrogation et la portion de fixation 12, dans le prolongement de la portion de logement 11 formant la portion rectiligne inférieure du point d'interrogation. La portion de fixation 12 est ainsi située dans le prolongement de la portion de logement 11 au droit et en s'écartant de celle-ci.

Le dispositif cache-câbles 1 selon l'invention est donc configuré de sorte qu'un logement L soit formé uniquement entre la portion de logement 11 du profilé 10 et une paroi P à laquelle il est fixé.

Une telle forme du profilé 10 avec une telle position de la portion de fixation 12 facilite la fixation du dispositif cache-câbles 1 sur une paroi P par l'intermédiaire de moyens de fixation, comme par exemple des vis de fixation, en ce que ladite portion de fixation 12 est d'accès aisé pour un opérateur, car écartée de la portion de logement 11.

Selon un mode de réalisation, ledit élément de rigidification 14 est un fil de métal.

L'élément de rigidification 14 peut ainsi être réalisé par exemple en acier, notamment en acier galvanisé afin de ne pas rouiller.

Ainsi, il est possible de déformer le profilé 10 du dispositif cache-câbles 1 selon différentes directions de l'espace afin d'obtenir la forme souhaitée du profilé 10, la forme de fil de l'élément de rigidification 14 permettant à celui-ci de se déformer selon toutes les directions de l'espace.

Comme visible sur les exemples de réalisation des figures 1, 2 et 5, ledit élément de rigidification 14 peut s'étendre sur toute la longueur L10 du profilé 10 du dispositif cache-câbles 1.

Le fil formant ledit élément de rigidification 14 peut présenter un diamètre compris entre 2 et 5 mm, de préférence entre 2,5 et 4 mm..

Afin d'améliorer la rigidité du profilé 10 du dispositif cache-câbles 1, notamment lorsque mis en forme, ledit élément de rigidification 14 n'étant plus rectiligne, il peut être prévu une pluralité d'éléments de rigidification 14, et notamment sous forme de fils de métal.

Le ou les éléments de rigidification 14 peu(ven)t être prévu(s) débordant au niveau d'au moins une extrémité latérale du profilé 10 (i.e.) selon la direction d'extension de l'élément de rigidification 14), afin que celui-ci puisse être introduit dans un profilé 10 d'un deuxième dispositif cache-câbles 1 adjacent et positionné dans le prolongement du premier dispositif cache-câbles 1 avec leur portion de logement 11 et leur portion de fixation respectives alignées, et afin d'assurer la solidarisation entre les deux dispositifs cache-câbles 1 adjacents. L'élément de rigidification 14 peut à cet effet être commun au premier dispositif cache-câbles 1 et au deuxième dispositif cache-câbles 1.

Alternativement, ou en complément, un moyen de solidarisation complémentaire (non représenté), peut être prévu, celui-ci étant configuré de sorte à solidariser deux dispositifs cache-câbles 1 adjacents et positionnés dans le prolongement l'un de l'autre avec leur portion de logement 11 et leur portion de fixation 12 respectives alignées. Ledit moyen de solidarisation complémentaire peut par exemple assurer la solidarisation des deux dispositifs cache-câbles 1 au niveau de leur portion de logement 11 respective et/ou au niveau de leur portion de fixation 12 respective.

Selon un mode de réalisation, ledit élément de rigidification 14 est disposé au niveau du profilé 10 en une zone intermédiaire ZI entre la section formant une portion de fixation 12 et la section semi-tubulaire 11 du profilé 10.

En plaçant ainsi ledit élément de rigidification 14, on s'assure que l'effort exercé par l'élément de rigidification afin de conférer de la rigidité est répartie sur l'ensemble du profilé 10, sur la section 12 et sur la section semi-tubulaire 11.

Alternativement, et sans sortir du cadre de la présente invention, ledit élément de rigidification peut être positionné ailleurs sur ledit profilé 10, et notamment au niveau de ladite section formant une portion de fixation 12.

Selon un mode de réalisation, la section semi-tubulaire 11 du profilé 10 présente une découpe 15 ménagée dans ladite section semi-tubulaire 11 sous la forme d'une encoche triangulaire 15 pointant vers ledit élément de rigidification 14, et ouverte du côté opposé audit élément de rigidification 14, ladite découpe 15 étant configurée de sorte à permettre le pliage du profilé 10, autour de ladite découpe 15.

Une telle découpe 15 permet en effet de diminuer la rigidité de la section semi-tubulaire 11, et sa forme spécifique permet de favoriser le pliage du profilé 10, selon différentes directions de l'espace comme visible sur les exemples de réalisation des figures 3, 4, 7 et 8, de sorte à prendre une certaine courbure, et notamment de définir un angle droit.

La forme et les dimensions de ladite découpe 15 sont choisies par l'Homme du métier de sorte à obtenir la forme souhaitée du profilé 10 du dispositif cache-câbles 1 de sorte à épouser la forme de ladite paroi P du bâtiment, sans nuire à l'esthétisme et à la fonction de protection du câble C dudit dispositif cache-câbles 1.

Ainsi, il peut également être envisagé de munir ledit profilé 10 d'une découpe 15 de forme différente d'une encoche triangulaire.

En effet, lorsque ledit profilé 10 est replié sur lui-même, comme visible sur les exemples de réalisation des figures 3, 4 et 7, ledit profilé 10, et notamment la section semi-tubulaire 11 peut comporter un excès de matière par rapport à son état non-contraint, comme représenté sur l'exemple de réalisation de la figure 1, qui le rend inesthétique, et éloigne une partie dudit profilé 10 de la paroi P du bâtiment, lorsque le dispositif cache-câbles 1 est fixé à ladite paroi P, ce qui nuit à la protection des câbles C, reçus dans le logement L, ménagé entre ladite section semi-tubulaire 11 et la paroi P du bâtiment.

Une telle découpe permet d'ôter cet excès de matière dudit profilé 10.

De même, et comme visible sur l'exemple de réalisation de la figure 8, le repliage du profilé 10 sur lui-même, selon le sens dans lequel il s'effectue, peut également générer un défaut de matière au niveau dudit profilé 10 par rapport à son état non*contraint, et notamment au niveau de la section semi-tubulaire 11. Ladite au moins une découpe 15 permet également de combler ce défaut de matière.

Egalement, et comme visible sur l'exemple de réalisation de la figure 8, il peut être prévu une pluralité de découpes 15 pour pouvoir replier ledit profilé 10 sur lui-même, le nombre de découpes 15 étant déterminé de sorte à trouver un bon compromis entre la courbure souhaitée dudit profilé 10 et le fait de devoir conserver suffisamment de matière sur le profilé pour pouvoir assurer une protection optimale des câbles C reçus dans ledit logement L formé entre la paroi P et la section semi-tubulaire 11 du profilé 10, notamment au niveau de la courbure dudit profilé 10.Une telle découpe 15 peut être réalisée par l'opérateur effectuant la fixation du dispositif cache-câbles 1 sur ladite paroi P, et avantageusement au cours de la fixation du dispositif cache-câbles 1 sur ladite paroi P.

A cet effet, l'élastomère dans lequel est réalisé ledit profilé 10 et/ou son épaisseur peu(ven)t être choisi(s) de sorte à faciliter la réalisation d'une telle découpe 15 dans le profilé 10 par ledit opérateur, notamment à l'aide d'un outil à main, comme par exemple un cutter, , tout en permettant d'assurer une protection fiable aux câbles C.

Selon l'invention, la section 12 formant portion de fixation s'étend de façon sensiblement rectiligne depuis la section semi-tubulaire 11 du profilé 10, et est configurée pour venir appuyer contre ladite paroi P du bâtiment au niveau de sa face intérieure F12, et dans lequel l'extrémité libre E10 du profilé 10, située à l'opposé à la portion de fixation 12, s'étend au-delà d'une droite imaginaire D suivant la trajectoire rectiligne de la portion de fixation 12, et se prolongeant du côté opposé au reste du profilé 10, lorsque non contraint élastiquement, de sorte à contraindre élastiquement la section semi-tubulaire 11, en simple appui par son extrémité libre E10 contre la paroi P d'un bâtiment, lorsque ledit dispositif cache-câbles 1 est fixé à ladite paroi P du bâtiment par sa portion de fixation 12.

Ainsi, grâce à cette disposition avantageuse de l'invention, et comme visible plus particulièrement sur l'exemple de réalisation de la figure 5, on s'assure que, une fois le dispositif cache-câbles 1 fixé à ladite paroi P d'un bâtiment, l'extrémité libre E10 demeure en appui contre ladite paroi P, et donc que le logement L formé entre ladite section semi-tubulaire 11 et ladite paroi P demeure fermé au niveau de ladite extrémité libre E10, ladite portion de fixation 12 étant également maintenue en appui contre ladite paroi P, afin d'assurer une dissimulation complète des câbles C fixés sur ladite paroi P, de sorte à améliorer l'esthétique de ladite paroi P, et à assurer une protection vis-à-vis des agressions extérieures auxdits câbles C.

Grâce à l'élasticité dudit profilé 10, l'extrémité E10 du profilé 10 peut également être écartée de ladite paroi P du bâtiment, afin de permettre un accès aux câbles C, par exemple pour effectuer leur maintenance, après la fixation du dispositif cache-câbles 1 sur ladite paroi P.

Ainsi, contrairement aux dispositifs cache-câbles connus de l'état de la technique, et notamment celui décrit dans le document EP 0 945 943 A1, il n'est pas nécessaire de prévoir un capot amovible, fixé par l'intermédiaire de moyens de fixation à une partie de fixation fixé à la paroi d'un bâtiment, pour assurer une dissimulation complète des câbles, et permettre un accès ultérieur à ces câbles.

Le dispositif cache-câble 1 est donc également de conception plus simple, plus rapide et plus facile à installer et présente un coût de revient inférieur à celui des dispositifs cache-câbles de l'état de la technique.

Afin d'améliorer l'étanchéité du logement L formé entre ladite section semi-tubulaire 11 et ladite paroi P, l'extrémité E10 peut être conformée de sorte à empêcher la pénétration de liquide à l'intérieur dudit logement, par exemple en étant réalisée sous la forme d'une lèvre. Alternativement, un moyen d'étanchéité, distinct dudit profilé 10, peut être fixé au niveau de ladite extrémité E10, par exemple un joint d'étanchéité.

Selon un mode de réalisation, ladite portion de logement 11 du profilé 10 a une section transversale avec une forme en portion de cercle.

Comme visible sur les exemples de réalisation des figures 1 à 5, une telle forme de la section transversale de la portion de logement 11 permet d'assurer le recouvrement des câbles C, généralement de section transversale circulaire également, tout en limitant l'encombrement du dispositif cache-câbles 1, et en améliorant l'esthétique dudit dispositif cache-câbles 1.

Alternativement, d'autres formes de la section transversale de la portion de logement peuvent être envisagées, sans sortir du cadre de la présente invention.

Selon un mode de réalisation, le dispositif cache-câbles 1 comprend en outre une entretoise 16, telle qu'une rondelle 16, configurée pour être positionnée entre ladite portion de fixation 12 et ladite paroi P du bâtiment, lorsque le dispositif cache-câbles 1 est fixé à ladite paroi P, de sorte à laisser un jour J entre ladite portion de fixation 12 et ladite paroi P, permettant l'écoulement de liquides.

En effet, malgré certaines dispositions de l'invention, prévues pour assurer l'étanchéité du logement L ménagé entre ladite section semi-tubulaire 11 et ladite paroi P, telles que décrites précédemment, il se peut que du liquide, comme par exemple de l'eau de pluie pénètre dans ledit logement L, et qu'une exposition prolongée desdits câbles C ou encore desdits moyens de fixation 13 au liquide, ne risque de les endommager.

Ainsi, grâce à l'emploi d'une telle entretoise 16, et comme visible plus particulièrement sur l'exemple de réalisation de la figure 5, même en cas de pénétration de liquide dans ledit logement, celui-ci, sous l'effet de la gravité, peut s'écouler immédiatement par ledit jour J, afin de ne pas demeurer dans ledit logement L.

A cet effet, également, ledit profilé 10 peut également être conformé de sorte à ne pas présenter de portion où le liquide peut stagner, une fois le dispositif cache-câbles 1 fixé à ladite paroi P. Notamment, comme visible plus particulièrement sur les exemples de réalisation des figures 2 et 5, la portion de fixation 12 et la portion de logement 11 peuvent être positionnées dans le prolongement l'une de l'autre de sorte que la zone intermédiaire ZI entre ladite portion de fixation 12 et la portion de logement 11 présente une courbure telle que l'eau ne peut pas stagner.

Selon un mode de réalisation, le profilé 10 en matière élastomère est obtenu par extrusion.

Ce procédé de fabrication dudit profilé 10 est particulièrement simple, rapide et peu onéreux à mettre en œuvre.

L'élément de rigidification 14 peut être réalisé au cours de la fabrication dudit profilé 10 par extrusion, par co-extrusion avec ledit profilé 10.

Alternativement, ledit profilé 10 peut être fabriqué avec une rainure, s'étendant selon la direction de la longueur L10 du profilé 10 et ouverte sur l'extérieur du profilé 10, avantageusement au niveau de la zone intermédiaire ZI entre la section semi-tubulaire 11 et la portion de fixation 12, ledit élément de rigidification 14 étant introduit dans le profilé 10 par ladite rainure, avant que celle-ci soit refermée, de sorte que l'élément de rigidification 14 se retrouve noyé dans la matière du profilé 10.

Alternativement, et sans sortir du cadre de la présente invention, ledit profilé 10 pourrait être réalisé par moulage, notamment par moulage à injection.

L'invention concerne également un procédé d'installation d'un dispositif cache-câbles 1, selon l'un des modes de réalisation décrit précédemment, sur la paroi P d'un bâtiment, sur laquelle est fixé au moins un câble C, comprenant les étapes :
a) mise en forme manuellement du dispositif cache-câbles 1 de sorte à épouser la forme de la paroi P du bâtiment par déformation plastique dudit élément de rigidification 14 selon une trajectoire non rectiligne, avec maintien en forme dudit profilé 10 élastomère, déformé élastiquement, par ledit élément de rigidification 14 déformé plastiquement,
b) positionnement du dispositif cache-câbles 1 sur ladite paroi P de sorte à ce que ledit au moins un câble C se retrouve dans le logement L défini entre la portion de logement 11 du profilé 10 du dispositif cache-câbles 1 et ladite paroi P,
c) fixation du dispositif cache-câbles 1 à ladite paroi P par l'intermédiaire d'au moins un moyen de fixation 13 reçu dans ladite portion de fixation 12 du profilé 10 du dispositif cache-câbles 1 et dans ladite paroi P du bâtiment.

Un tel procédé d'installation est particulièrement simple et rapide à mettre en œuvre, par un opérateur, notamment seul, car, comme expliqué précédemment, l'étape a) de mise en forme du dispositif cache-câbles 1 peut se faire au cours de l'installation du dispositif cache-câbles 1 sur ladite paroi P, et de sorte à épouser au mieux la forme de ladite paroi P.

Egalement, le logement L recevant ledit au moins un câble C étant prévu entre ladite paroi P et ladite portion de logement 11 du profilé 10 du dispositif cache-câbles 1, il est possible d'installer ledit dispositif cache-câbles 1, alors que ledit au moins un câble C est déjà fixé sur ladite paroi P du bâtiment, sans devoir retirer lesdits câbles C, contrairement au dispositif décrit dans le document EP 0 945 943 A1.

Ledit au moins un moyen de fixation 13 peut par exemple être une vis de fixation, comme visible sur l'exemple de réalisation de la figure 5.

Selon un mode de réalisation du procédé, avant l'étape a) on réalise une découpe 15 dans le profilé 10 du dispositif cache-câbles 1 pour former un dispositif câbles 1 qui est plié autour de ladite découpe 15 de sorte à épouser la forme de ladite paroi P.

Ainsi, comme expliqué précédemment, le dispositif cache-câbles 1 peut être plié sur lui-même, notamment selon la longueur L10 du profilé 10, ou alternativement selon une direction perpendiculaire à la longueur L10 du profilé 10, autour de ladite découpe 15, afin d'épouser la forme de ladite paroi P, même quand celle-ci possède une forme complexe, par exemple avec des angles.

Avantageusement, et comme expliqué précédemment, ladite découpe peut être réalisée par l'opérateur mettant en œuvre les étapes a) et b) du procédé.

L'invention concerne encore une paroi P d'un bâtiment recevant en fixation au moins un câble C courant le long de ladite paroi P du bâtiment, ladite paroi P étant également équipée d'un dispositif cache-câbles 1 selon l'un des modes de réalisation décrits précédemment, conformé de sorte à se retrouver en appui contre ladite paroi P sur toute sa longueur L10, et fixé à ladite paroi P par l'intermédiaire d'au moins un moyen de fixation 13 reçu au niveau de la portion de fixation 12 du profilé 10 du dispositif cache-câbles 1 et dans ladite paroi P, dans une position telle que ledit au moins un câble C est logé à l'intérieur du logement L défini entre la portion de logement 11 du profilé 10 du dispositif cache-câbles 1 et ladite paroi, ledit profilé 10 du dispositif cache-câbles 1 pouvant passer :
- d'une position de fermeture, dans laquelle l'extrémité libre E10 du profilé 10 du dispositif cache-câbles 1 se trouve à proximité de ladite paroi P, de sorte à empêcher l'accès audit au moins un câble C, en le protégeant des agressions extérieures, à
- une position d'ouverture, dans laquelle l'extrémité libre E10 du profilé 10 du dispositif cache-câbles 1 se trouve écartée de ladite paroi P, de sorte à autoriser l'accès audit au moins un câble C, et inversement.

Ainsi, comme expliqué précédemment, l'accès audit au moins un câble C, positionné dans ledit logement L formé entre ladite paroi P et la portion de logement 11 du profilé 10, par exemple pour en effectuer la maintenance, est facilité et accéléré par rapport aux dispositifs cache-câbles de l'état de la technique, car il ne nécessite pas le retrait d'éléments du dispositif cache-câbles 1, comme par exemple un capot ou un moyen de fixation, comme par exemple pour le dispositif cache-câbles décrit dans le document EP 0 945 943 A1.

L'invention ne se limite pas aux exemples de dispositif cache-câbles, de procédé d'installation d'un tel dispositif cache-câbles sur une paroi d'un bâtiment et de paroi d'un bâtiment décrits ci-avant, seulement à titre d'exemple, mais elle englobe toutes les variantes que pourra envisager l'homme de l'art dans le cadre de la protection recherchée.

Naturellement, d'autres modes de réalisation auraient pu être envisagés par l'Homme du métier sans pour autant sortir du cadre de l'invention définie par les revendications ci-après.

### Liste des signes de référence

- 1.: Dispositif cache-câbles

- P.: Paroi
- C.: Câble
- 10.: Profilé
- L10.: Longueur
- E10.: Extrémité libre
- 11.: Section semi-tubulaire/portion de logement
- 12.: Portion de fixation
- F12.: Face intérieure
- 13.: Moyen de fixation
- 14.: Elément de rigidification
- 15.: Découpe
- 16.: Rondelle
- ZI.: Zone intermédiaire
- D.: Droite imaginaire
- J.: Jour
- L.: Logement

## Revendications

1. Dispositif cache-câbles (1), destiné à être fixé à la paroi (P) d'un bâtiment, comprenant un profilé (10) d'un seul tenant en un matériau élastomère, ledit profilé (10) comprenant :
- une section semi tubulaire (11) définissant une portion de logement (11), configurée pour définir, en coopération avec ladite paroi (P) d'un bâtiment, une fois le dispositif cache-câbles (1) fixé à ladite paroi (P), un logement (L) apte à recevoir un ou plusieurs câbles (C) fixés à ladite paroi (P),
- une section formant une portion de fixation (12), positionnée dans le prolongement de la section semi tubulaire (11), et configurée pour être fixée à ladite paroi (P) d'un bâtiment par l'intermédiaire d'au moins un moyen de fixation (13),
ledit dispositif cache-câbles (1) comprenant en outre un élément de rigidification (14) dans un matériau métallique, configuré pour se déformer plastiquement, et s'étendant au sein dudit profilé (10) en matériau élastomère,
ledit élément de rigidification (14) coopérant avec ledit profilé (10), de sorte que l'ensemble profilé (10) et élément de rigidification (14) soit configuré pour être mis en forme manuellement par la déformation plastique dudit élément de rigidification (14) selon une trajectoire non rectiligne, avec maintien en forme dudit profilé (10) déformé élastiquement, par ledit élément de rigidification (14) déformé plastiquement
**caractérisé en ce que** le profilé (10) présente une section sensiblement en forme de point d'interrogation avec la portion de logement (11) formant la portion arrondie supérieure du point d'interrogation et la portion de fixation (12), dans le prolongement de la portion de logement (11) formant la portion rectiligne inférieure du point d'interrogation, afin que le dispositif cache-câble (1) soit configuré de sorte qu'un logement (L) soit formé uniquement entre la portion de logement (11) du profilé (10) et une paroi (P) à laquelle il est fixé,
et **en ce que** la section formant portion de fixation (12) s'étend de façon sensiblement rectiligne depuis la section semi-tubulaire (11) du profilé (10), et est configurée pour venir appuyer contre ladite paroi (P) du bâtiment au niveau de sa face intérieure (F12), et dans lequel l'extrémité libre (E10) du profilé (10), située à l'opposé de la portion de fixation (12), s'étend au-delà d'une droite imaginaire (D) suivant la trajectoire rectiligne de la portion de fixation (12), et se prolongeant du côté opposé au reste du profilé (10), lorsque non contraint élastiquement, de sorte à contraindre élastiquement la section semi-tubulaire (11), en simple appui par son extrémité libre (E10) contre ladite paroi (P) d'un bâtiment, lorsque ledit dispositif cache-câbles (1) est fixé à ladite paroi (P) du bâtiment par sa portion de fixation (12).

2. Dispositif cache-câbles (1) selon la revendication 1, dans lequel ledit élément de rigidification (14) est un fil de métal.

3. Dispositif cache-câbles (1) selon la revendication 1 ou 2, dans lequel ledit élément de rigidification (14) est disposé au niveau du profilé (10) en une zone intermédiaire (ZI) entre la section formant une portion de fixation (12) et la section semi-tubulaire (11) du profilé (10).

4. Dispositif cache-câbles (1) selon la revendication 3, dans lequel la section semi-tubulaire (11) du profilé (10) présente une découpe (15) ménagée dans ladite section semi-tubulaire (11) sous la forme d'une encoche triangulaire pointant vers ledit élément de rigidification (14), et ouverte du côté opposé audit élément de rigidification (14), ladite découpe (15) étant configurée de sorte à permettre le pliage du profilé (10), autour de ladite découpe (15).

5. Dispositif cache-câbles (1) selon l'une des revendications 1 à 4, dans lequel ladite portion de logement (11) du profilé (10) a une section transversale avec une forme en portion de cercle.

6. Dispositif cache-câbles (1) selon l'une des revendications 1 à 5, comprenant en outre une entretoise (16), telle qu'une rondelle, configurée pour être positionnée entre ladite portion de fixation (12) et ladite paroi (P) du bâtiment, lorsque le dispositif cache-câbles (1) est fixé à ladite paroi (P), de sorte à laisser un jour (J) entre ladite portion de fixation (12) et ladite paroi (P), permettant l'écoulement de liquides.

7. Dispositif cache câble (1) selon l'une des revendications 1 à 6, dans lequel le profilé (10) en matière élastomère est obtenu par extrusion.

8. Procédé d'installation d'un dispositif cache-câbles (1) selon l'une des revendications 1 à 7 sur la paroi (P) d'un bâtiment, sur laquelle est fixé au moins un câble (C), comprenant les étapes :
a) mise en forme manuellement du dispositif cache-câbles (1) de sorte à épouser la forme de la paroi (P) du bâtiment par déformation plastique dudit élément de rigidification (14) selon une trajectoire non rectiligne, avec maintien en forme dudit profilé (10) élastomère, déformé élastiquement, par ledit élément de rigidification (14) déformé plastiquement,
b) positionnement du dispositif cache-câbles (1) sur ladite paroi (P) de sorte à ce que ledit au moins un câble (C) se retrouve dans le logement (L) défini entre la portion de logement (11) du profilé (10) du dispositif cache-câbles (1) et ladite paroi (P),
c) fixation du dispositif cache-câbles (1) à ladite paroi (P) par l'intermédiaire d'au moins un moyen de fixation (13) reçu dans ladite portion de fixation (12) du profilé (10) du dispositif cache-câbles (1) et dans ladite paroi (P) du bâtiment.

9. Procédé d'installation selon la revendication 8 dans lequel, avant l'étape a) on réalise une découpe (15) dans le profilé (10) du dispositif cache-câbles (1) pour former un dispositif cache-câbles (1) selon la revendication 4 qui est plié autour de ladite découpe (15) de sorte à épouser la forme de ladite paroi (P).

10. Paroi (P) d'un bâtiment recevant en fixation au moins un câble (C) courant le long de ladite paroi (P) du bâtiment,
ladite paroi (P) étant également équipée d'un dispositif cache-câbles (1) selon l'une des revendications 1 à 7, conformé de sorte à se retrouver en appui contre ladite paroi (P) sur toute sa longueur (L10), et fixé à ladite paroi (P) par l'intermédiaire d'au moins un moyen de fixation (13) reçu au niveau de la portion de fixation (12) du profilé (10) du dispositif cache-câbles (1) et dans ladite paroi (P), dans une position telle que ledit au moins un câble (C) est logé à l'intérieur du logement (L) défini entre la portion de logement (11) du profilé (10) du dispositif cache-câbles (1) et ladite paroi (P), ledit profilé (10) du dispositif cache-câbles (1) pouvant passer :
- d'une position de fermeture, dans laquelle l'extrémité libre (E10) du profilé (10) du dispositif cache-câbles (1) se trouve à proximité de ladite paroi (P), de sorte à empêcher l'accès audit au moins un câble (C), en le protégeant des agressions extérieures, à
- une position d'ouverture, dans laquelle l'extrémité libre (E10) du profilé (10) du dispositif cache-câbles (1) se trouve écartée de ladite paroi (P), de sorte à autoriser l'accès audit au moins un câble (C), et inversement.

## Patentansprüche

1. Kabelabdeckungsvorrichtung (1), welche dazu ausgebildet ist, an der Wand (P) eines Gebäudes befestigt zu werden, umfassend ein einteiliges Profil (10) aus einem elastomeren Material, wobei das Profil (10) umfasst:
- einen halbrohrförmigen Abschnitt (11), der einen Aufnahmeabschnitt (11) begrenzt, welcher derart ausgebildet ist, dass er, wenn die Kabelabdeckungsvorrichtung (1) an der Wand (P) befestigt ist, in Zusammenwirken mit der Wand (P) eines Gebäudes, eine Aufnahme (L) begrenzt, die ein oder mehrere an der Wand (P) befestigte Kabel (C) aufnehmen kann,
- einen Abschnitt, der einen Befestigungsabschnitt (12) bildet, der in der Verlängerung des halbrohrförmigen Abschnitts (11) positioniert und dazu ausgebildet ist, mittels wenigstens eines Befestigungsmittels (13) an der Wand (P) eines Gebäudes befestigt zu werden,
wobei die Kabelabdeckungsvorrichtung (1) ferner ein Versteifungselement (14) aus einem metallischen Material umfasst, welches dazu ausgebildet ist, sich plastisch zu verformen und welches sich innerhalb des Profils (10) aus elastomerem Material erstreckt,
wobei das Versteifungselement (14) mit dem Profil (10) zusammenwirkt, so dass die Anordnung aus Profil (10) und Versteifungselement (14) derart ausgebildet ist, dass sie durch die plastische Verformung des Versteifungselements (14) entlang einer nicht geradlinigen Bahn manuell geformt werden kann, wobei das elastisch verformte Profil (10) durch das plastisch verformte Versteifungselement (14) in Form gehalten wird,
**dadurch gekennzeichnet, dass** das Profil (10) einen im Wesentlichen fragezeichenförmigen Querschnitt aufweist, wobei der Aufnahmeabschnitt (11) den oberen abgerundeten Abschnitt des Fragezeichens bildet, und der Befestigungsabschnitt (12), in der Verlängerung des Aufnahmeabschnitts (11) den geraden inneren Abschnitt des Fragezeichens bildet, so dass die Kabelabdeckungsvorrichtung (1) derart ausgebildet ist, dass eine Aufnahme (L) nur zwischen dem Aufnahmeabschnitt (11) des Profils (10) und einer Wand (P), an der sie befestigt ist, gebildet ist,
und dass der Abschnitt, der den Befestigungsabschnitt (12) bildet, sich im Wesentlichen geradlinig von dem halbrohrförmigen Abschnitt (11) des Profils (10) erstreckt und derart ausgebildet ist, dass er an der Wand (P) des Gebäudes an ihrer Innenseite (F12) anliegt, und wobei sich das freie Ende (E10) des Profils (10), das sich gegenüber dem Befestigungsabschnitt (12) befindet, über eine imaginäre Gerade (D) der geradlinigen Bahn des Befestigungsabschnitts (12) folgend hinaus erstreckt und sich auf der gegenüberliegenden Seite des Rests des Profils (10) fortsetzt, wenn es nicht elastisch zusammengezogen ist, sodass der halbrohrförmige Abschnitt (11) elastisch zusammengezogen wird, mit seinem freien Ende (E10) einfach an der Wand (P) eines Gebäudes anliegend, wenn die Kabelabdeckungsvorrichtung (1) durch ihren Befestigungsabschnitt (12) an der Wand (P) des Gebäudes befestigt ist.

2. Kabelabdeckungsvorrichtung (1) nach Anspruch 1, wobei das Versteifungselement (14) ein Metalldraht ist.

3. Kabelabdeckungsvorrichtung (1) nach Anspruch 1 oder 2, wobei das Versteifungselement (14) an dem Profil (10) in einem Zwischenbereich (ZI) zwischen dem Abschnitt, der einen Befestigungsabschnitt (12) bildet, und dem halbrohrförmigen Abschnitt (11) des Profils (10) angeordnet ist.

4. Kabelabdeckungsvorrichtung (1) nach Anspruch 3, wobei der halbrohrförmige Abschnitt (11) des Profils (10) einen Einschnitt (15) aufweist, der in dem halbrohrförmigen Abschnitt (11) in Form einer dreieckigen Aussparung ausgenommen ist, die in Richtung des Versteifungselements (14) zeigt und auf der dem Versteifungselement (14) gegenüberliegenden Seite offen ist, wobei der Einschnitt (15) derart ausgebildet ist, dass er das Falten des Profils (10) um den Einschnitt (15) herum ermöglicht.

5. Kabelabdeckungsvorrichtung (1) nach einem der Ansprüche 1 bis 4, wobei der Aufnahmeabschnitt (11) des Profils (10) einen Querschnitt in Form eines Kreisabschnittes aufweist.

6. Kabelabdeckungsvorrichtung (1) nach einem der Ansprüche 1 bis 5, ferner umfassend einen Abstandshalter (16), z. B. eine Unterlegscheibe, welcher dazu ausgebildet ist, zwischen dem Befestigungsabschnitt (12) und der Wand (P) des Gebäudes positioniert zu werden, wenn die Kabelabdeckungsvorrichtung (1) an der Wand (P) befestigt ist, so dass ein Spalt (J) zwischen dem Befestigungsabschnitt (12) und der Wand (P) verbleibt, der das Fließen von Flüssigkeiten ermöglicht.

7. Kabelabdeckungsvorrichtung (1) nach einem der Ansprüche 1 bis 6, wobei das Profil (10) aus elastomerem Material durch Extrusion erhalten ist.

8. Verfahren zum Anbringen einer Kabelabdeckungsvorrichtung (1) nach einem der Ansprüche 1 bis 7 an der Wand (P) eines Gebäudes, an der wenigstens ein Kabel (C) befestigt ist, umfassend folgende Schritte:
a) manuelles Formen der Kabelabdeckungsvorrichtung (1), so dass sie sich der Form der Wand (P) des Gebäudes durch plastische Verformung des Versteifungselements (14) entlang einer nicht geradlinigen Bahn anpasst, wobei das elastisch verformte elastomere Profil (10) durch das plastisch verformte Versteifungselement (14) in Form gehalten wird,
b) Positionieren der Kabelabdeckungsvorrichtung (1) an der Wand (P), so dass sich das wenigstens eine Kabel (C) in der Aufnahme (L) befindet, die zwischen dem Aufnahmeabschnitt (11) des Profils (10) der Kabelabdeckungsvorrichtung (1) und der Wand (P) begrenzt (1) wird,
c) Befestigen der Kabelabdeckungsvorrichtung (1) an der Wand (P) mittels wenigstens eines Befestigungsmittels (13), das in dem Befestigungsabschnitt (12) des Profils (10) der Kabelabdeckung (1) und in der Wand (P) des Gebäudes aufgenommen ist.

9. Installationsverfahren nach Anspruch 8, wobei vor Schritt a) ein Einschnitt (15) in das Profil (10) der Kabelabdeckung (1) erfolgt, um eine Kabelabdeckung (1) nach Anspruch 4 zu bilden, die um den Einschnitt (15) herum derart gefaltet ist, dass sie sich der Form der Wand (P) anpasst.

10. Wand (P) eines Gebäudes, welche wenigstens ein Kabel (C) entlang der Wand (P) des Gebäudes befestigt aufnimmt,
wobei die Wand (P) ferner mit einer Kabelabdeckung (1) nach einem der Ansprüche 1 bis 7 ausgestattet ist, die derart angepasst ist, dass sie über ihre gesamte Länge (L10) an der Wand (P) anliegt und an der Wand (P) durch wenigstens ein Befestigungsmittel (13) befestigt ist, welches am Befestigungsabschnitt (12) des Profils (10) der Kabelabdeckung (1) und in der Wand (P) in einer Position derart aufgenommen ist, dass das wenigstens eine Kabel (C) in der zwischen dem Aufnahmeabschnitt (11) des Profils (10) der Kabelabdeckung (1) und der Wand (P) begrenzten Aufnahme (L) aufgenommen ist, wobei sich das Profil (10) der Kabelabdeckung (1) wie folgt bewegen kann:
- von einer Schließstellung, in der sich das freie Ende (E10) des Profils (10) der Kabelabdeckung (1) in der Nähe der Wand (P) befindet, so dass der Zugang zu dem wenigstens einen Kabel (C) verhindert wird, wobei es vor äußeren Beeinträchtigungen geschützt wird, zu
- einer Öffnungsstellung, in der sich das freie Ende (E10) des Profils (10) der Kabelabdeckung (1) beabstandet zu der Wand (P) befindet, so dass der Zugang zu wenigstens einem Kabel (C) erlaubt wird, und umgekehrt.

## Claims

1. Cable concealing device (1), intended to be attached to the wall (P) of a building, comprising an integral profile (10) made of an elastomer material, said profile (10) comprising:
- a semi-tubular section (11) defining a housing portion (11), configured to define, in combination with said wall (P) of a building, once the cable concealing device (1) is attached to said wall (P), a housing (L) capable of receiving one or more cables (C) attached to said wall (P),
- a section forming an attachment portion (12), positioned in the extension of the semi-tubular section (11), and configured to be attached to said wall (P) of a building by means of at least one attachment means (13),
said cable concealing device (1) further comprising a stiffening element (14) made of a metal material, configured to plastically deform, and extending within said profile (10) made of elastomer material,
said stiffening element (14) cooperating with said profile (10), such that the profile (10) and stiffening element (14) assembly is configured to be manually shaped by plastic deformation of said stiffening element (14) along a non-rectilinear trajectory, with said elastically deformed profile (10) retaining its shape, by said plastically deformed stiffening element (14),
**characterised in that** the profile (10) has a cross section substantially in the shape of a question mark, with the housing portion (11) forming the upper rounded portion of the question mark and the attachment portion (12), in the extension of the housing portion (11), forming the rectilinear lower portion of the question mark, so that the cable concealing device (1) is configured such that a housing (L) is formed only between the housing portion (11) of the profile (10) and a wall (P) to which it is attached,
and **in that** the section forming the attachment portion (12) extends substantially rectilinearly from the semi-tubular section (11) of the profile (10), and is configured to abut against said wall (P) of the building at its inner face (F12), and wherein the free end (E10) of the profile (10), located opposite the attachment portion (12), extends beyond an imaginary straight line (D) following the rectilinear trajectory of the attachment portion (12), and extending on the side opposite the remainder of the profile (10), when not elastically constrained, so as to elastically constrain the semi-tubular section (11), in simple abutment by its free end (E10) against said wall (P) of a building, when said cable concealing device (1) is attached to said wall (P) of the building by its attachment portion (12).

2. Cable concealing device (1) according to claim 1, wherein said stiffening element (14) is a metal wire.

3. Cable concealing device (1) according to claim 1 or 2, wherein said stiffening element (14) is arranged at the profile (10) in an intermediate zone (ZI) between the section forming an attachment portion (12) and the semi-tubular section (11) of the profile (10).

4. Cable concealing device (1) according to claim 3, wherein the semi-tubular section (11) of the profile (10) has a cut (15) provided in said semi-tubular section (11) in the form of a triangular notch pointing towards said stiffening element (14), and open on the side opposite said stiffening element (14), said cut (15) been configured so as to allow the folding of the profile (10), around said cut (15).

5. Cable concealing device (1) according to any one of claims 1 to 4, wherein said housing portion (11) of the profile (10) has a cross-section with the shape of a portion of a circle.

6. Cable concealing device (1) according to any one of claims 1 to 5, further comprising a spacer (16), such as a washer, configured to be positioned between said attachment portion (12) and said wall (P) of the building, when the cable concealing device (1) is attached to said wall (P), so as to leave a gap (J) between said attachment portion (12) and said wall (P), allowing the flow of liquids.

7. Cable concealing device (1) according to any one of claims 1 to 6, wherein the profile (10) made of elastomer material is obtained by extrusion.

8. Method for installing a cable concealing device (1) according to any one of claims 1 to 7 on the wall (P) of a building, on which at least one cable (C) is attached, comprising the steps:
a) manually shaping the cable concealing device (1) so as to conform to the shape of the wall (P) of the building by plastic deformation of said stiffening element (14) along a non-rectilinear trajectory, with said elastically deformed elastomer profile (10) retaining its shape by said plastically deformed stiffening element (14),
b) positioning the cable concealing device (1) on said wall (P) such that said at least one cable (C) is located in the housing (L) defined between the housing portion (11) of the profile (10) of the cable concealing device (1) and said wall (P),
c) attaching the cable concealing device (1) to said wall (P) via at least one attachment means (13) received in said attachment portion (12) of the profile (10) of the cable concealing device (1) and in said wall (P) of the building.

9. Installation method according to claim 8 wherein, before step a), a cut (15) is made in the profile (10) of the cable concealing device (1) to form a cable concealing device (1) according to claim 4 which is folded around said cut (15) so as to conform to the shape of said wall (P).

10. Wall (P) of a building receiving, by attachment, at least one cable (C) running along said wall (P) of the building,
said wall (P) also being equipped with a cable concealing device (1) according to any one of claims 1 to 7, shaped so as to be located in abutment against said wall (P) over its entire length (L10), and attached to said wall (P) via at least one attachment means (13) received at the attachment portion (12) of the profile (10) of the cable concealing device (1) and in said wall (P), in a position such that said at least one cable (C) is housed inside the housing (L) defined between the housing portion (11) of the profile (10) of the cable concealing device (1) and said wall (P), said profile (10) of the cable concealing device (1) being able to pass:
- from a closed position, in which the free end (E10) of the profile (10) of the cable concealing device (1) located next to said wall (P), so as to prevent the access to said at least one cable (C), protecting it against external aggression, to
- an open position, in which the free end (E10) of the profile (10) of the cable concealing device (1) is located away from said wall (P), so as to allow access to said at least one cable (C), and vice versa.
